# DEMANDE DE BREVET EUROPEEN

(11) **EP 2 136 179 A1**
(43) Date de publication de la demande: **23.12.2009**
(21) Numéro de dépôt: 08158353.6
(22) Date de dépôt: 16.06.2008
(51) Int. Cl.: G01C 5/06, G01C 25/00

(54) **Instrument de calibration d'un dispositif altimétrique**

(71) Demandeur: EM Microelectronic-Marin SA, 2074 Marin (CH)
(72) Inventeur: Willemin, Michel, 2515, Prêles (CH)
(74) Mandataire: Couillard, Yann Luc Raymond

(57) **Abrégé**

Instrument de calibration pour un dispositif altimétrique fournissant une indication de l'altitude du lieu où il se trouve sur la base d'une mesure de la pression atmosphérique, **caractérisé en ce qu**'il comprend des moyens pour émettre un signal portant une information représentative de l'altitude à laquelle il est installé.

L'invention concerne également un dispositif fournissant une indication de l'altitude du lieu où il se trouve sur la base d'une mesure de la pression atmosphérique ainsi qu'un système de calibration comprenant un instrument de calibration et un dispositif altimétrique.

## Description

La présente invention concerne un instrument de calibration d'un dispositif altimétrique. Plus précisément, la présente invention concerne un instrument permettant de calibrer automatiquement un dispositif fournissant à son utilisateur une indication altimétrique sur la base de la pression atmosphérique.

Il existe sur le marché divers dispositifs indiquant à leurs utilisateurs l'altitude du lieu où ceux-ci se trouvent. A titre d'exemple, on peut citer la montre commercialisée par la société horlogère suisse Tissot sous la marque T-Touch®. Par un simple effleurement d'une touche tactile, le porteur d'une montre Tissot peut instantanément connaître l'altitude à laquelle il se trouve. Néanmoins, l'inconvénient de la montre Tissot tout comme des autres dispositifs altimétriques réside dans le fait que la détermination altimétrique se fait sur la base de la pression atmosphérique qui est sujette à variations aussi bien temporelles que géographiques. Par conséquent, si la pression atmosphérique du lieu où se trouve l'utilisateur du dispositif altimétrique change, l'indication altimétrique fournie par ledit dispositif altimétrique va fluctuer. Si l'utilisateur connaît l'altitude exacte du lieu où il se trouve, il peut recalibrer son dispositif altimétrique. Sinon, l'utilisateur doit consulter une carte routière, Internet ou toute autre source d'information pour connaître l'altitude à laquelle il se trouve. Une fois en possession de cette information, il peut recalibrer son dispositif altimétrique. Néanmoins, pour la plupart des dispositifs altimétriques, l'étape de recalibration requiert une succession d'opérations assez complexe, ce qui rend cette recalibration fastidieuse pour l'utilisateur.

Le système de positionnement par satellite connu sous sa dénomination anglo-saxonne « Global Positioning System » ou « GPS » est maintenant couramment employé par exemple pour repérer le positionnement d'un véhicule automobile à la surface de la Terre. Il en sera bientôt de même avec le système européen Galileo. Il est des cas où le système GPS doit utiliser l'information d'altitude pour pouvoir déterminer la position d'un objet. Ceci est typiquement le cas lorsque la topologie n'est pas univoque, c'est-à-dire lorsqu'à un même point du globe correspondent des altitudes différentes. Imaginons en effet un endroit d'une ville entouré de gratte-ciel sur lesquels les signaux satellites se réfléchissent ou bien encore un entrelacs d'autoroutes en milieu urbain. Il n'est pas rare en effet qu'en différents endroits, une portion d'autoroute en enjambe une autre. Pour pouvoir déterminer sur quelle portion d'autoroute se trouve le véhicule automobile, le système GPS doit donc connaître avec précision l'altitude à laquelle se trouve ledit véhicule. Or, la précision du système GPS est meilleure dans le plan qu'en hauteur. C'est pourquoi il est courant d'équiper les systèmes GPS d'un système de détermination de l'altitude. Néanmoins, ces systèmes de détermination d'altitude sont basés sur la mesure de la pression atmosphérique. Afin qu'ils puissent fournir au système GPS une indication d'altitude fiable, il est nécessaire de les recalibrer périodiquement. Or, à la connaissance de la demanderesse, il n'existe pas de moyen pour recalibrer automatiquement un dispositif altimétrique et c'est donc à l'utilisateur qu'incombe la charge d'effectuer manuellement cette opération.

La présente invention a pour but de pallier les inconvénients susmentionnés ainsi que d'autres encore en procurant un instrument réalisant automatiquement la calibration d'un dispositif altimétrique.

A cet effet, la présente invention concerne système de calibration d'un dispositif altimétrique, ce dispositif altimétrique comprenant des moyens pour fournir, sur la base d'une mesure de la pression atmosphérique, une indication de l'altitude du lieu où se trouve le dispositif altimétrique, **caractérisé en ce qu**'il comprend un instrument de calibration qui émet un signal portant une information représentative de l'altitude à laquelle ledit instrument de calibration est disposé, ce signal étant détecté par le dispositif altimétrique qui utilise l'information d'altitude pour recalibrer les moyens fournissant l'indication d'altitude.

La présente invention concerne aussi un instrument de calibration pour un dispositif altimétrique fournissant une indication de l'altitude du lieu où il se trouve sur la base d'une mesure de la pression atmosphérique, **caractérisé en ce qu**'il comprend des moyens pour émettre un signal portant une information représentative de l'altitude à laquelle il est installé.

La présente invention concerne également un dispositif altimétrique comprenant des moyens pour fournir une indication de l'altitude du lieu où il se trouve sur la base d'une mesure de la pression atmosphérique, **caractérisé en ce qu**'il comprend en outre des moyens pour recevoir un signal portant une information relative à l'altitude du lieu où il se trouve et pour utiliser cette information pour recaler ses moyens de détermination de l'altitude.

Grâce à ces caractéristiques, la présente invention procure un système permettant de recalibrer automatiquement un dispositif altimétrique fournissant à son utilisateur une indication de l'altitude à laquelle il se trouve sur la base d'une mesure de la pression atmosphérique. En effet, l'instrument de calibration émet un signal portant une information relative à l'altitude de l'emplacement où il est implanté. Cette altitude est déterminée au moment où l'instrument de calibration est implanté et n'a pas pour vocation de changer puisque ledit instrument de calibration est destiné à rester définitivement à l'endroit où il a été installé. Par suite, lorsque l'utilisateur passe avec son dispositif altimétrique à proximité de l'instrument de calibration, le dispositif altimétrique capte le signal émis par l'instrument de calibration et utilise l'information représentative de l'altitude portée par ce signal pour recaler ses moyens de détermination de l'altitude.

De multiples instruments de calibration peuvent être placés en tout endroit imaginable. A la maison, il peut par exemple être installé dans le garage, de sorte que le dispositif altimétrique associé au système GPS du véhicule automobile sera recalibré à chaque fois que le véhicule pénétrera dans le garage. L'instrument de calibration peut aussi être placé par exemple sur une table de nuit dans le cas où le dispositif de détermination de l'altitude est intégré dans une montre-bracelet. Le dispositif altimétrique sera ainsi recalé chaque soir lorsque le porteur posera sa montre sur sa table de nuit.

Dans le cas des applications domestiques (bureau, maison, garage, etc.), on peut envisager que l'instrument de calibration émette son signal de calibration à fréquence basse, par exemple une fois toutes les quinze minutes, pendant une durée d'une milliseconde à chaque fois. Au contraire, dans les lieux fréquentés (restaurants, hôtels, campings, etc.) ou encore le long des routes, on peut envisager que l'instrument de calibration émette le signal de calibration à fréquence élevée, par exemple une fois toutes les deux ou trois secondes, pour une durée d'une milliseconde à chaque fois.

L'instrument de calibration est un appareil basse puissance. Alimenté par une pile, son autonomie est d'un an environ. Il comprend une mémoire non volatile dans laquelle l'altitude du lieu où il est implanté est programmée. Il comprend également des moyens d'émission d'un signal portant l'information d'altitude. Le signal peut être un signal radiofréquence, un signal infrarouge ou bien encore un signal ultrasonore. Quant au dispositif altimétrique, il doit notamment comprendre, outre les moyens nécessaires pour mesurer la pression atmosphérique, des moyens pour recevoir le signal émis par l'instrument et mémoriser l'information d'altitude reçue. Ainsi, selon le cas, le dispositif altimétrique comprendra des moyens de réception d'un signal radiodiffusé, d'un signal infrarouge, d'un signal ultrasonore ou autre.

Dans sa variante la plus simple, le dispositif altimétrique peut comprendre de simples circuits logiques qui vont mettre en oeuvre un algorithme approprié permettant de remplacer la valeur d'altitude calculée par la valeur d'altitude reçue de l'instrument de calibration. Bien entendu, le dispositif altimétrique peut également comprendre un circuit microcontrôleur notamment dans le cas où il est équipé de moyens d'affichage, par exemple à cristaux liquides, qui vont afficher la nouvelle valeur d'altitude transmise par l'instrument de calibration selon l'invention.

## Revendications

1. Instrument de calibration pour un dispositif altimétrique fournissant une indication de l'altitude du lieu où il se trouve sur la base d'une mesure de la pression atmosphérique, **caractérisé en ce qu'**il comprend des moyens pour émettre un signal portant une information représentative de l'altitude à laquelle il est installé.

2. Dispositif altimétrique comprenant des moyens pour fournir une indication de l'altitude du lieu où il se trouve sur la base d'une mesure de la pression atmosphérique, **caractérisé en ce qu'**il comprend en outre des moyens pour recevoir un signal portant une information relative à l'altitude du lieu où il se trouve et pour utiliser cette information pour recaler ses moyens de détermination de l'altitude.

3. Système de calibration d'un dispositif altimétrique, ce dispositif altimétrique comprenant des moyens pour fournir, sur la base d'une mesure de la pression atmosphérique, une indication de l'altitude du lieu où il se trouve, le système de calibration étant **caractérisé en ce qu'**il comprend un instrument de calibration qui émet un signal portant une information représentative de l'altitude à laquelle ledit instrument de calibration est disposé, ce signal étant détecté par le dispositif altimétrique qui utilise l'information d'altitude pour recalibrer les moyens fournissant l'indication d'altitude.
